# FASCICULE DE BREVET EUROPEEN

(11) **EP 3 356 651 B1**
(45) Date de publication et mention de la délivrance du brevet: **10.11.2021**
(21) Numéro de dépôt: 16790634.6
(22) Date de dépôt: 27.09.2016
(51) Int. Cl.: F01D 5/28, F04D 29/32

(54) **AUBE COMPRENANT UN BOUCLIER DE BORD D'ATTAQUE ET PROCÉDÉ DE FABRICATION DE L'AUBE**
SCHAUFEL MIT EINEM SHUTZSCHILD AN DER VORDERKANTE UND HERSTELLUNGSVERFAHREN VON DIESER SCHAUFEL
BLADE HAVING A SHIELD AT THE LEADING EDGE AND METHOD OF MANUFACTURING THIS BLADE

(30) Priorité: 28.09.2015 FR 1559127
(43) Date de publication de la demande: 08.08.2018
(73) Titulaire: Safran Aircraft Engines, 75015 Paris (FR)
(72) Inventeur: NOTARIANNI, Gilles Pierre-Marie, 77550 Moissy-Cramayel Cedex (FR); GUIVARC'H, Jérémy, 77550 Moissy-Cramayel Cedex (FR); POUZADOUX, Frédéric Jean-Bernard, 77550 Moissy-Cramayel Cedex (FR); RAULIN, Dominique, 77550 Moissy-Cramayel Cedex (FR); RUF, Thibault, 77550 Moissy-Cramayel Cedex (FR)
(74) Mandataire: Cabinet Beau de Loménie
(86) Numéro de dépôt international: PCT/FR2016/052443
(87) Numéro de publication internationale: WO 2017/055726

(56) Documents cités:
- EP-A1- 0 202 153
- EP-A1- 0 776 822
- EP-A1- 2 811 144
- EP-A2- 2 253 806
- EP-A2- 2 703 605
- US-A- 1 545 560

## Description

La présente invention concerne une aube en matériau composite comportant un bouclier de bord d'attaque. De tels boucliers de bord d'attaque sont typiquement destinés à protéger les bords d'attaque d'aubes tournantes ou d'aubes directrices contre les impacts et l'érosion. On entend par « aubes », dans ce contexte, tant les aubes de soufflante que les pales d'hélice aérienne. Afin de limiter leur poids, ces aubes sont typiquement en composite à matrice organique, par exemple en polymère renforcée par des fibres. Bien que ces matériaux présentent des qualités mécaniques généralement très favorables, en particulier par rapport à leur masse, ils présentent une certaine sensibilité aux impacts ponctuels. Des boucliers, typiquement en matériau métallique hautement résistant, comme les alliages de titane, sont donc normalement installés sur les bords d'attaque de telles aubes, afin de les protéger contre ces impacts. Ces boucliers prennent normalement la forme d'une fine ailette intrados et une fine ailette extrados jointes par une section plus épaisse chevauchant le bord d'attaque, l'ensemble épousant la forme de l'aube sur le bord d'attaque et des sections adjacentes de l'intrados et de l'extrados. Les ailettes intrados et extrados s'étendent sur ces sections de, respectivement, l'intrados et l'extrados de l'aube, et servent principalement à assurer le positionnement et la fixation du bouclier sur le bord d'attaque. EP0776822 décrit une pale à blindage de protection renforcée contre la foudre.

Afin d'améliorer les performances aérodynamiques des aubes, leurs bords d'attaque présentent des formes de plus en plus complexes, ce qui complique la fabrication des boucliers devant épouser ces formes ainsi que la solidarisation du bouclier sur l'aube.

Par ailleurs, lors d'impacts sur une aube, le bouclier peut se désolidariser au moins partiellement du bord d'attaque de l'aube en composite et engendrer une altération des performances aérodynamiques liée à la dégradation de l'aérodynamisme de l'aube accompagnée d'un balourd dans le cas d'une perte partielle du bouclier. En outre, si une portion du bouclier est arrachée, le bord d'attaque de l'aube n'est plus protégé sur toute sa hauteur, le composite au bord d'attaque de l'aube mis à nu est soumis aux agressions de l'environnement extérieur. Le profil qui en résulte est généralement irrégulier ce qui entraîne également une perte d'aérodynamisme. Il faut alors réparer l'aube et/ou la remplacer.

### Objet et résumé de l'invention

La présente invention vise à remédier au moins en partie à ces inconvénients.

A cet effet, selon la revendication 1, l'invention a pour objet une aube comprenant un corps d'aube en matériau composite à matrice organique renforcée par des fibres et un bouclier de bord d'attaque en un matériau ayant une meilleure résistance aux impacts ponctuels que le matériau composite du corps d'aube, l'aube comportant une tête d'aube, le bouclier de bord d'attaque étant assemblé sur le corps d'aube et comportant une ailette intrados et une ailette extrados, l'ailette intrados comportant un rabat intrados et l'ailette extrados comportant un rabat extrados, le rabat intrados et le rabat extrados étant repliés l'un sur l'autre et solidarisés l'un avec l'autre de sorte à former un recouvrement partiel de la tête d'aube.

Lors de chocs sur le bouclier de bord d'attaque, la présence des rabats intrados et extrados qui prolongent les ailettes intrados et extrados permet de réduire les risques de décollement du bouclier, en particulier près des bords libres du bouclier de bord d'attaque en tête d'aube, où ces décollements sont le plus fréquemment constatés. En effet, les rabats intrados et extrados ne sont pas rapportés, collés ou soudés sur les ailettes intrados et extrados, ils ne sont donc pas séparables des ailettes intrados et extrados. Ces rabats intrados et extrados sont venus de matière respectivement avec les ailettes intrados et extrados si bien que pour décoller le bouclier de bord d'attaque du corps d'aube, il faut désolidariser les ailettes intrados et extrados du corps d'aube et également désolidariser le rabat intrados du rabat extrados. L'effort à fournir pour décoller le bouclier de bord d'attaque du corps d'aube est donc plus important. Aussi, les risques d'endommagement de l'aube sont réduits.

Le bouclier de bord d'attaque peut être en alliage à base de titane.

Ce matériau présente une très bonne résistance aux impacts ponctuels.

On entend par alliage à base de titane, des alliages dont la teneur massique en titane est majoritaire. On comprend que le titane est donc l'élément dont la teneur massique dans l'alliage est la plus élevée. L'alliage à base de titane a par exemple une teneur massique d'au moins 50% de titane, de préférence d'au moins 70% de titane, encore plus préférentiellement d'au moins 80% de titane.

Le bouclier de bord d'attaque peut également être en acier ou en alliage métallique communément désigné par la marque déposée Inconel™. On parle par la suite d'Inconel pour désigner un alliage à base de fer alliés avec du nickel et du chrome.

Le rabat intrados et le rabat extrados peuvent être solidarisés l'un sur l'autre par collage ou par soudage.

Ces deux techniques sont simples à réaliser et permettent de garantir une bonne solidarisation du rabat intrados avec le rabat extrados.

Le rabat intrados peut être replié sur le rabat extrados.

Dans une soufflante de turboréacteur, les aubes sont mises en rotation dans un carter disposé autour des aubes. Un point fixe du carter verra d'abord passer l'intrados de l'aube et ensuite l'extrados. Aussi, le rabat intrados étant replié sur le rabat extrados, lors d'un contact entre la tête d'aube et le carter, le risque que le rabat intrados soit désolidarisé du rabat extrados est réduit. Cette disposition des rabats intrados et extrados permet donc de réduire les risques d'ouverture du rabat intrados lors d'un contact involontaire avec le carter.

Le rabat intrados ou le rabat extrados peut être solidarisé à la tête d'aube.

Le rabat disposé entre la tête d'aube et l'autre rabat est solidarisé avec la tête d'aube également, par exemple par collage. On réalise ainsi une meilleure solidarisation des rabats intrados et extrados avec la tête d'aube.

Selon la revendication 1, l'ailette intrados et l'ailette extrados comportent chacune un bord libre, l'une des ailettes intrados ou extrados est plus longue que l'autre et le rabat de l'ailette la plus longue comporte une découpe partant du bord libre de l'ailette la plus longue vers le bord libre de l'ailette la plus courte.

Cette découpe de l'ailette la plus longue permet de faire une transition, en tête d'aube, entre le bord libre de l'ailette la plus longue et le bord libre de l'ailette la plus courte sur la tête d'aube.

Au moins une partie de la découpe peut comporter un rayon de courbure.

Le rayon de courbure de la découpe permet de minimiser la concentration des contraintes locales pouvant être présente le long de la découpe lorsque la découpe présente des changements brusques de direction. La découpe n'est pas qu'une ligne droite entre le bord libre de l'ailette la plus longue et le bord libre de l'ailette la plus courte sur la tête d'aube. La découpe peut présenter un rayon de courbure qui évolue le long de la découpe. Aussi, la découpe peut présenter une première partie qui longe l'arrête formée par la tête d'aube et une seconde partie rectiligne rejoignant le bord libre de l'ailette la plus courte, ces deux parties étant reliées par une partie présentant un rayon de courbure faible par rapport aux deux autres parties, c'est-à-dire une partie à courbure forte. La découpe peut également présenter une partie rectiligne et une partie ayant un rayon de courbure. La partie comportant le rayon de courbure important peut être précédé et/ou suivi de parties rectilignes ou de parties comportant un rayon de courbure faible.

Le rabat de l'ailette la plus courte peut comporter un flan partant du bord libre de l'ailette la plus courte vers le bord libre de l'ailette la plus longue.

Le flan de l'ailette la plus courte permet de faire une transition entre le bord libre de l'ailette la plus longue et le bord libre de l'ailette la plus courte sur la tête d'aube. La forme du flan peut correspondre à la forme de la découpe de l'ailette la plus longue si bien que le recouvrement partiel de la tête d'aube a une épaisseur constante sur toute sa surface, l'épaisseur du recouvrement partiel étant égal à la somme de l'épaisseur du rabat extrados et de l'épaisseur du rabat intrados. Par ailleurs, grâce à ce flan, on augmente la surface de contact entre le rabat intrados et le rabat extrados. On peut donc augmenter la surface de solidarisation des rabats intrados et extrados.

Le corps d'aube peut comporter, en tête d'aube, un logement de réception du rabat intrados et/ou du rabat extrados.

Ainsi, la surface de la tête d'aube est plane et l'aube ne présente pas de surépaisseur en tête d'aube due au pliage du rabat intrados et du rabat extrados.

L'invention concerne également un turboréacteur comprenant une soufflante comportant une pluralité d'aubes telles que définies cidessus.

L'invention concerne aussi un procédé de fabrication d'une aube telle que précédemment définie comprenant les étapes suivantes :
- assemblage du bouclier de bord d'attaque sur le corps d'aube ;
- pliage du rabat extrados sur la tête d'aube ;
- pliage du rabat intrados sur le rabat extrados ;
- solidarisation du rabat extrados et du rabat intrados par collage ou soudage.

Le rabat extrados peut être collé sur la tête d'aube.

### Brève description des dessins

D'autres caractéristiques et avantages de l'invention ressortiront de la description suivante de modes de réalisation de l'invention, donnés à titre d'exemples non limitatifs, en référence aux figures annexées, sur lesquelles :
- la figure 1 est une vue schématique en perspective d'un turboréacteur à double flux ;
- la figure 2 est une vue schématique en perspective du côté intrados d'une aube tournante de la soufflante du turboréacteur de la figure 1 selon un premier mode de réalisation de l'aube ;
- la figure 3 est une vue schématique partielle en perspective de l'aube de la figure 2 avant le pliage des rabats ;
- la figure 4 est une vue schématique partielle en perspective de d'une aube tournante selon un deuxième mode de réalisation de l'aube ;
- les figures 5 à 7 sont des vues partielle en coupe de l'aube de la figure 4 respectivement selon le plan V-V, VI-VI et VII-VII ;
- les figures 8A et 8B sont des vues schématiques partielles d'une aube tournante selon un troisième mode de réalisation de l'aube ;
- les figures 9 et 10 sont des vues schématiques partielles d'une aube tournante selon un quatrième et un cinquième mode de réalisation de l'aube.

### Description détaillée de l'invention

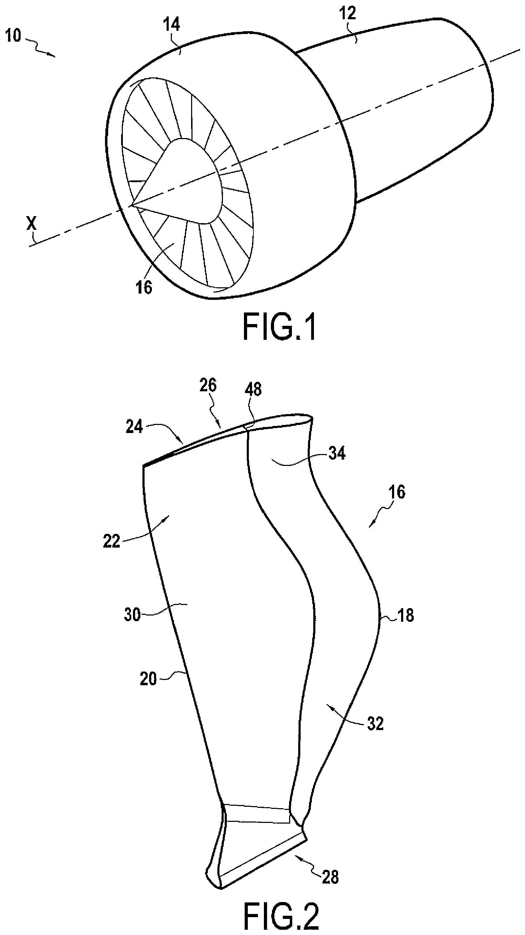

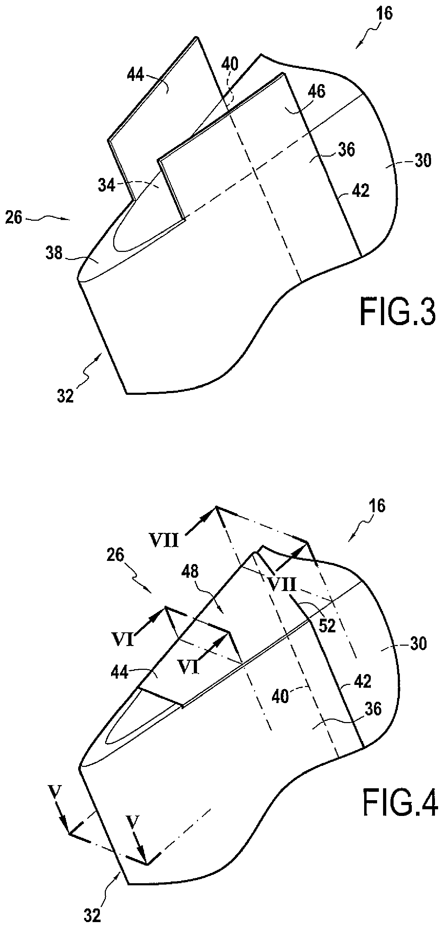

La figure 1 illustre un turboréacteur à double flux 10 comprenant un groupe générateur de gaz 12 et une soufflante 14. Cette soufflante 14 comprend une pluralité d'aubes tournantes 16, arrangées radialement autour d'un axe central X, et profilées aérodynamiquement de manière à impulser l'air par leur rotation. Ainsi, comme illustré sur les figures 2 et 3, chaque aube 16 présente un bord d'attaque 18, un bord de fuite 20, un intrados 22, un extrados 24, une tête d'aube 26 et un pied d'aube 28.

En fonctionnement normal, le vent relatif est sensiblement orienté vers le bord d'attaque 18 de chaque aube 16. Ainsi, ce bord d'attaque 18 est particulièrement exposé aux impacts. En particulier quand l'aube 16 comprend un corps d'aube 30 en matériau composite, notamment à matrice organique, par exemple en polymère renforcée par des fibres, il convient donc de protéger le bord d'attaque 18 avec un bouclier de bord d'attaque 32 intégré à chaque aube. En d'autres termes, le bouclier de bord d'attaque 32 est assemblé sur le corps d'aube 30.

Le bouclier de bord d'attaque 32 est fabriqué en un matériau ayant une meilleure résistante aux impacts ponctuels que le matériau composite du corps d'aube 30. Le bouclier de bord d'attaque 32 est principalement métallique, et plus spécifiquement en alliage à base de titane, comme par exemple le TA6V (Ti-6Al-4V). Le bouclier de bord d'attaque 32 pourrait également être en acier ou en alliage métallique communément désigné par la marque déposée Inconel™. On parle par la suite d'Inconel pour désigner un alliage à base de fer alliés avec du nickel et du chrome.

Le bouclier de bord d'attaque 32 comporte une ailette intrados 34, une ailette extrados 36 et une section centrale 38 plus épaisse, destinée à chevaucher un bord du corps d'aube 30 et reliant l'ailette intrados 34 et l'ailette extrados 36. Les ailettes intrados et extrados 34, 36 assurent le positionnement du bouclier 32 sur le corps d'aube 30. Les ailettes intrados et extrados 34, 36 présentent chacune un bord libre 40, 42 et présentent, sur la figure 3, des longueurs identiques.

Par ailleurs, l'ailette intrados 34 comporte un rabat intrados 44 et l'ailette extrados 36 comporte un rabat extrados 46. Le rabat intrados 44 et le rabat extrados 46 sont venus de matière avec respectivement l'ailette intrados 34 et ailette extrados 36.

Sur la figure 2, les rabats intrados 44 et extrados 46 sont représentés repliés l'un sur l'autre de sorte à former un recouvrement partiel 48 de la tête d'aube 26. En outre, le rabat intrados 44 est solidarisé avec le rabat extrados 46, par exemple par collage par soudage.

Le procédé de fabrication de l'aube 16 comprend une première étape d'assemblage du bouclier de bord d'attaque 32 sur le corps d'aube 30, comme représenté sur la figure 3. Le procédé comprend également une étape de pliage du rabat extrados 46 sur la tête d'aube 26 et une étape de pliage du rabat intrados 44 sur le rabat extrados 46, le rabat extrados 46 et le rabat intrados 44 étant solidarisés l'un avec l'autre par collage ou par soudage.

Le procédé de fabrication de l'aube 16 peut également comprendre une étape au cours de laquelle le rabat disposé entre la tête d'aube 26 et l'autre rabat est également solidarisé avec la tête d'aube 26, par exemple par collage. Dans le cas présent, le rabat extrados 46 peut être collé sur la tête d'aube 26.

L'aube 16 peut également être fabriquée, après assemblage du bouclier de bord d'attaque 32 sur le corps d'aube 30 en pliant d'abord le rabat intrados 44 sur la tête d'aube 26 et en pliant ensuite le rabat extrados 46 sur le rabat intrados 44. Lorsque l'on replie d'abord le rabat intrados 44 sur la tête d'aube 26, on pourra envisager de coller le rabat intrados 44 sur la tête d'aube 26. Le rabat intrados 44 et le rabat extrados 46 sont solidarisés par collage ou par soudage.

Dans ce qui suit, les éléments communs aux différents modes de réalisation sont identifiés par les mêmes références numériques.

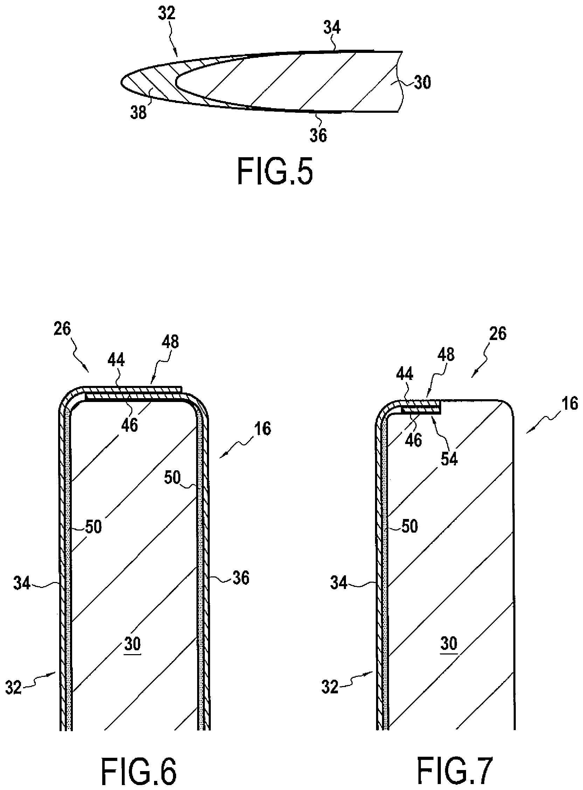

Les figures 4 à 7 représentent un deuxième mode de réalisation de l'aube 16 dans lequel l'ailette intrados 34 est plus longue que l'ailette extrados 36, voir en particulier la figure 5.

Par ailleurs, dans le mode de réalisation des figures 4 à 7, le rabat intrados 44 est replié sur le rabat extrados 46. Le rabat intrados 44 et le rabat extrados 46 sont solidarisés l'un avec l'autre par collage ou par soudage. Ils forment un recouvrement partiel 48 de la tête d'aube 26. Le rabat extrados 46 peut être collé sur la tête d'aube 26.

Le rabat intrados 44 comporte en outre une découpe 52 partant du bord libre 40 de l'ailette intrados 34 vers le bord libre 42 de l'ailette extrados 42 lorsque le rabat intrados 44 et le rabat extrados 46 sont repliés l'un sur l'autre sur la tête d'aube 26.

Dans le mode de réalisation des figures 4 à 7, le corps d'aube 30 comporte, en tête d'aube 26, un logement 54 de réception du rabat intrados 44 et du rabat extrados 46 de sorte que la tête d'aube 26 présente une surface lisse et ne présentant pas de surépaisseur au droit du recouvrement partiel 48 de la tête d'aube 26.

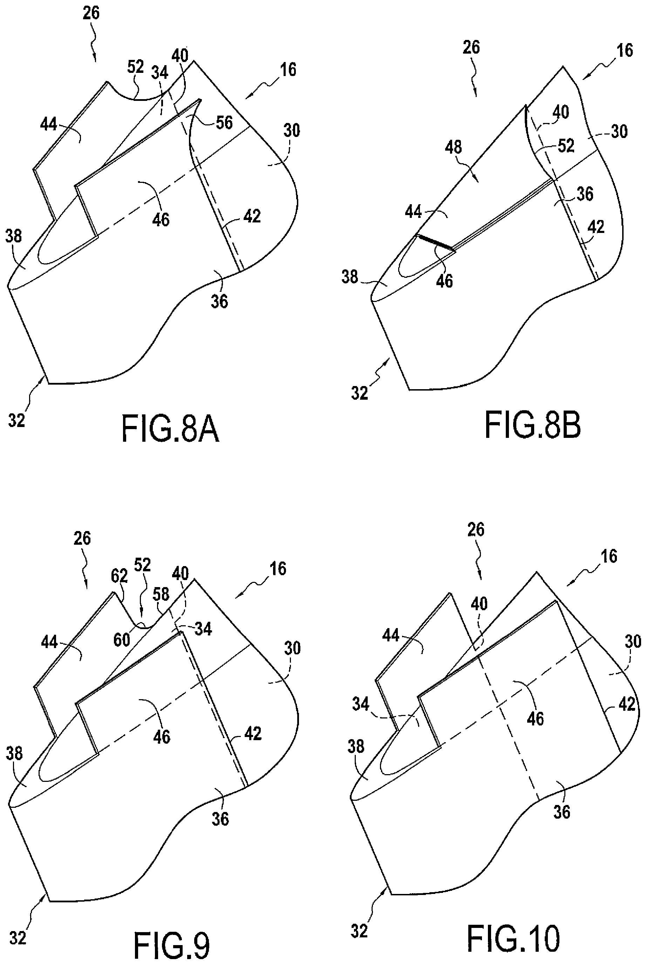

Les figures 8A et 8B représentent un troisième mode de réalisation de l'aube 16 dans lequel, l'ailette intrados 34 est plus longue que l'ailette extrados 36, le rabat intrados 44 étant repliée sur le rabat extrados 46. Le rabat intrados 44 comporte une découpe 52 partant du bord libre 40 de l'ailette intrados 34 vers le bord libre 42 de l'ailette extrados 42 lorsque le rabat intrados 44 et le rabat extrados 46 sont repliés l'un sur l'autre sur la tête d'aube 26. De plus, le rabat extrados 46 comporte un flan 56 partant du bord libre 42 de l'ailette extrados 36 vers le bord libre 40 de l'ailette intrados 34 lorsque le rabat intrados 44 et le rabat extrados 46 sont repliés l'un sur l'autre sur la tête d'aube 26.

Dans le mode de réalisation des figures 8A et 8B, la découpe 52 est courbe, c'est-à-dire que la découpe 52 comporte au moins un rayon de courbure. Le rayon de courbure peut évoluer le long de la découpe 52 du bord libre 40 de l'ailette intrados 34 vers le bord libre 42 de l'ailette extrados 36 ou être constant.

Par ailleurs, le corps d'aube 30 ne présente pas de logement de réception des rabats intrados 44 et extrados 46 si bien que les rabats intrados 44 et extrados 46 forment des surépaisseurs de la tête d'aube 26 sur le recouvrement partiel 48 de la tête d'aube 26.

La figure 9 représente un mode de réalisation de l'aube 16similaire au mode de réalisation des figures 8A et 8B mais qui en diffère en ce que la découpe 52 présente une première partie 58 partant du bord libre 40 de l'ailette intrados 34 et qui longe le bord de la tête d'aube 26, et d'une deuxième partie rectiligne 62 rejoignant le bord libre 42 de l'ailette extrados 36, la première partie 58 et la deuxième partie rectiligne 62 étant reliées entre elles par une troisième partie 60 présentant un rayon de courbure faible par rapport aux autres parties 58, 62, c'est-à-dire que la troisième partie 60 présente une courbure forte par rapport aux autres parties de la découpe 52.

La figure 10 représente un mode de réalisation de l'aube 16, dans lequel l'ailette extrados 36 est plus longue que l'ailette intrados 34.

Quoique la présente invention ait été décrite en se référant à des exemples de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

Notamment, une découpe 52 présentant une partie comportant un rayon de courbure peut être combinée avec un logement de réception des rabats intrados et extrados. Le logement de réception peut ne recevoir qu'un des deux rabats. Le logement de réception peut recevoir les deux rabats dans une partie du logement de réception et ne recevoir qu'un seul rabat dans l'autre partie du logement de réception, par exemple lorsque le rabat de l'ailette la plus courte ne présente pas de flan.

## Revendications

1. Aube (16) comprenant un corps d'aube (30) en matériau composite à matrice organique renforcée par des fibres et un bouclier de bord d'attaque (32) en un matériau ayant une meilleure résistance aux impacts ponctuels que le matériau composite du corps d'aube, l'aube (16) comportant une tête d'aube (26), le bouclier de bord d'attaque (32) étant assemblé sur le corps d'aube (30) et comportant une ailette intrados (34) et une ailette extrados (36), **caractérisé en ce que** l'ailette intrados (34) comporte un rabat intrados (44) et **en ce que** l'ailette extrados (36) comporte un rabat extrados (46), le rabat intrados (44) et le rabat extrados (46) étant repliés l'un sur l'autre et solidarisés l'un avec l'autre de sorte à former un recouvrement partiel (48) de la tête d'aube (26), **caractérisé en ce que** l'ailette intrados (34) et l'ailette extrados (36) comportent chacune un bord libre (40, 42), l'une des ailettes intrados ou extrados (34, 36) étant plus longue que l'autre et le rabat de l'ailette la plus longue comportant une découpe (52) partant du bord libre de l'ailette la plus longue vers le bord libre de l'ailette la plus courte

2. Aube (16) selon la revendication 1, dans laquelle le rabat intrados (44) et le rabat extrados (46) sont solidarisés l'un sur l'autre par collage ou par soudage.

3. Aube (16) selon la revendication 1 ou 2, dans laquelle le rabat intrados (44) est replié sur le rabat extrados (46).

4. Aube (16) selon l'une quelconque des revendications précédentes, dans laquelle le rabat intrados (44) ou le rabat extrados (46) est solidarisé à la tête d'aube (26).

5. Aube (16) selon l'une quelconque des revendications précédentes, dans laquelle au moins une partie de la découpe (52) comporte un rayon de courbure.

6. Aube (16) selon l'une quelconque des revendications précédentes, dans laquelle le rabat de l'ailette la plus courte comporte un flan (56) partant du bord libre de l'ailette la plus courte vers le bord libre de l'ailette la plus longue.

7. Aube (16) selon l'une quelconque des revendications précédentes, dans laquelle le corps d'aube (30) comporte, en tête d'aube (26), un logement (54) de réception du rabat intrados (44) et/ou du rabat extrados (46).

8. Turboréacteur (10) comprenant une soufflante (14) comportant une pluralité d'aubes (16) selon l'une quelconque des revendications précédentes.

9. Procédé de fabrication d'une aube (16) selon l'une quelconque des revendications 1 à 7, comprenant les étapes suivantes :
- assemblage du bouclier de bord d'attaque (32) sur le corps d'aube (30) ;
- pliage du rabat extrados (46) sur la tête d'aube (26) ;
- pliage du rabat intrados (44) sur le rabat extrados (46) ;
- solidarisation du rabat extrados (46) et du rabat intrados (44) par collage ou soudage.

## Patentansprüche

1. Schaufel (16), umfassend einen Schaufelkörper (30) aus Verbundwerkstoff mit einer faserverstärkten organischen Matrix und einen Vorderkantenschutzschild (32) aus einem Material, das eine bessere Widerstandsfähigkeit gegenüber punktuellen Aufschlägen als der Verbundwerkstoff des Schaufelkörpers aufweist, wobei die Schaufel (16) einen Schaufelkopf (26) umfasst, wobei der Vorderkantenschutzschild (32) an dem Schaufelkörper (30) angebracht ist und einen vorderseitigen Flügel (34) und einen rückseitigen Flügel (36) umfasst, **dadurch gekennzeichnet, dass** der vorderseitige Flügel (34) eine vorderseitige Klappe (44) umfasst und dass der rückseitige Flügel (36) eine rückseitige Klappe (46) umfasst, wobei die vorderseitige Klappe (44) und die rückseitige Klappe (46) aufeinander umgeschlagen und fest miteinander verbunden sind, um eine Teilabdeckung (48) des Schaufelkopfes (26) zu bilden, **dadurch gekennzeichnet, dass** der vorderseitige Flügel (34) und der rückseitige Flügel (36) jeweils einen freien Rand (40, 42) aufweisen, wobei einer des vorderseitigen oder des rückseitigen Flügels (34, 36) länger als der andere ist und die Klappe des längeren Flügels einen Ausschnitt (52) von dem freien Rand des längeren Flügels hin zum freien Rand des kürzeren Flügels umfasst.

2. Schaufel (16) nach Anspruch 1, bei der die vorderseitige Klappe (44) und die rückseitige Klappe (46) durch Kleben oder durch Schweißen fest miteinander verbunden sind.

3. Schaufel (16) nach Anspruch 1 oder 2, bei der die vorderseitige Klappe (44) auf die rückseitige Klappe (46) umgeschlagen ist.

4. Schaufel (16) nach einem der vorhergehenden Ansprüche, bei der die vorderseitige Klappe (44) oder die rückseitige Klappe (46) mit dem Schaufelkopf (26) fest verbunden ist.

5. Schaufel (16) nach einem der vorhergehenden Ansprüche, bei der wenigstens ein Teil des Ausschnittes (52) einen Krümmungsradius aufweist.

6. Schaufel (16) nach einem der vorhergehenden Ansprüche, bei der die Klappe des kürzeren Flügels einen Zuschnitt (56) von dem freien Rand des kürzeren Flügels hin zum freien Rand des längeren Flügels umfasst.

7. Schaufel (16) nach einem der vorhergehenden Ansprüche, bei welcher der Schaufelkörper (30) am Schaufelkopf (26) eine Aufnahme (54) zum Aufnehmen der vorderseitigen Klappe (44) und/oder der rückseitigen Klappe (46) umfasst.

8. Turbostrahltriebwerk (10), umfassend ein Gebläse (14), das eine Vielzahl von Schaufeln (16) nach einem der vorhergehenden Ansprüche umfasst.

9. Verfahren zur Herstellung einer Schaufel (16) nach einem der Ansprüche 1 bis 7, umfassend die folgenden Schritte:
- Anbringen des Vorderkantenschutzschildes (32) an dem Schaufelkörper (30),
- Umlegen der rückseitigen Klappe (46) auf den Schaufelkopf (26),
- Umlegen der vorderseitigen Klappe (44) auf die rückseitige Klappe (46),
- festes Verbinden der rückseitigen Klappe (46) und der vorderseitigen Klappe (44) durch Kleben oder Schweißen.

## Claims

1. A blade (16) comprising a blade body (30) made of organic matrix composite material reinforced by fibers and a leading edge shield (32) made of a material that withstands point impacts better than the composite material of the blade body, the blade (16) including a blade tip (26), the leading edge shield (32) being assembled on the blade body (30) and including a pressure-side fin (34) and a suction-side fin (36), the blade being **characterized in that** the pressure-side fin (34) includes a pressure-side tab (44) and **in that** the suction-side fin (36) includes a suction-side tab (46), the pressure-side tab (44) and the suction-side tab (46) being folded one on the other and being secured to each other so as to form a partial covering (48) of the blade tip (26), the blade being **characterized in that** the pressure-side fin (34) and the suction-side fin (36) each includes a free edge (40, 42), one of the pressure-side and suction-side fins (34, 36) being longer than the other, and the tab of the longer fin including a cutout (52) starting from the free edge of the longer fin and going towards the free edge of the shorter fin.

2. A blade (16) according to claim 1, wherein the pressure-side tab (44) and the suction-side tab (46) are secured to each other by adhesive or by welding.

3. A blade (16) according to claim 1 or claim 2, wherein the pressure-side tab (44) is folded onto the suction-side tab (46).

4. A blade (16) according to any preceding claim, wherein the pressure-side tab (44) or the suction-side tab (46) is secured to the blade tip (26).

5. A blade (16) according to any preceding claim, wherein at least a portion of the cutout (52) has a radius of curvature.

6. A blade (16) according to any preceding claim, wherein the tab of the shorter fin includes a projection (56) starting from the free edge of the shorter fin and going towards the free edge of the longer fin.

7. A blade (16) according to any preceding claim, wherein the blade body (30) includes a housing (54) at the blade tip (26) for receiving the pressure-side tab (44) and/or the suction-side tab (46).

8. A turbojet (10) including a fan (14) having a plurality of blades (16) according to any preceding claim.

9. A method of fabricating a blade (16) according to any one of claims 1 to 7, the method comprising the following steps:
• assembling the leading edge shield (32) on the blade body (30);
• folding the suction-side tab (46) onto the blade tip (26);
• folding the pressure-side tab (44) onto the suction-side tab (46); and
• securing the suction-side tab (46) and the pressure-side tab (44) to each other by adhesive or by welding.
